# EUROPEAN PATENT APPLICATION

(11) **EP 4 825 742 A1**
(43) Date of publication of application: **21.10.2026**
(21) Application number: 24904417.3
(22) Date of filing: 13.12.2024
(51) Int. Cl.: B64U 20/87, B64D 7/00, G06V 20/52, G06V 20/17, G06V 10/70, H04N 7/18, G08G 5/00, G05D 1/46, B64U 101/15, B64U 101/31

(54) **AERIAL VEHICLE FOR TRACKING AND SHOOTING DOWN ILLEGAL AERIAL VEHICLE AND OPERATION METHOD THEREFOR**

(30) Priority: 14.12.2023 KR 20230181903; 14.08.2024 KR 20240109361
(71) Applicant: Kyungpook National University Industry-Academic Cooperation Foundation, Daegu 41566 (KR)
(72) Inventor: LEE, Kyuman, Daegu 41566 (KR); LEE, Hojun, Daegu 41566 (KR)
(74) Representative: Jung, Minkyu
(86) International application number: PCT/KR2024/096884
(87) International publication number: WO 2025/127852

(57) **Abstract**

A method of operating an aircraft may include: detecting a target aircraft on the basis of an image photographed through an image photographing device; controlling the image photographing device to track the target aircraft and obtaining tracking information of the image photographing device on the basis of a region of the target aircraft in the photographed image and a central point inside the photographed image; obtaining pose information of the target aircraft on the basis of the photographed image; and generating a flight guidance command for tracking and striking the target aircraft on the basis of the tracking information of the image photographing device and the pose information of the target aircraft.

## Description

### [Technical Field]

The present invention relates to an aircraft and a method of operating the aircraft.

### [Background Art]

As a use of an unmanned aircraft has dramatically increased in past few years, there has been an increase in cases where such an aircraft is illegally flown or used for a terrorism purpose at airports, military bases, and major infrastructures. Such an illegal aircraft poses a serious threat to public safety.

Accordingly, there is a need to develop technology of a response system that can quickly and accurately track and strike the illegal aircraft.

The present invention was derived from research conducted as part of Individual Basic Research of the Ministry of Science and ICT (MSIT) (Project Identification No.: 1711191634, Sub-Project No.: 2021R1G1A1095335, Project Management Institution: National Research Foundation of Korea, Research Project Title: SA-VINS: Development of a Smart Autonomous Navigation System for Aerial Robots for Inventory Management in Indoor Warehouses, Project Execution Institution: Kyungpook National University, Research Period: March 01, 2023 to February 29, 2024).

Meanwhile, the government of the Republic of Korea providing the project has no property interest in all aspects of the present invention. Prior Art Literature: (Patent Document 1) Korean Patent Publication No. KR 10- 2308700

### [Disclosure]

### [Technical Problem]

The present invention is directed to providing an aircraft capable of automatically detecting an illegal aircraft and quickly and accurately tracking and striking the illegal aircraft on the basis of tracking information of an image photographing device and pose information of the illegal aircraft, and a method of operating the same.

### [Technical Solution]

According to an aspect, a method of operating an aircraft including: detecting a target aircraft on the basis of an image photographed through an image photographing device; controlling the image photographing device to track the target aircraft and obtaining tracking information of the image photographing device on the basis of a region of the target aircraft in the photographed image and a central point inside the photographed image; obtaining pose information of the target aircraft on the basis of the photographed image; and generating a flight guidance command for tracking and striking the target aircraft on the basis of the tracking information of the image photographing device and the pose information of the target aircraft is provided.

According to an embodiment, the controlling of the image photographing device may include: setting a monitoring region that includes the region of the target aircraft in the photographed image; and controlling the image photographing device so as to minimize an error between a central point of the monitoring region and the central point inside the photographed image.

According to an embodiment, the tracking information may include relative altitude information of the target aircraft based on the aircraft and relative direction information of the target aircraft based on the aircraft.

According to an embodiment, the obtaining of the pose information of the target aircraft may include: obtaining coordinate information on predetermined positions of the target aircraft on the basis of a monitoring region including the region of the target aircraft in the photographed image; and obtaining velocity information including movement speed information and movement direction information of the target aircraft based on the image photographing device on the basis of the coordinate information.

According to an embodiment, the obtaining of the coordinate information may include: calculating a first coordinate representing a top-left coordinate that is the farthest from a central coordinate of the monitoring region; and calculating a second coordinate representing a top-right coordinate that is the farthest from the central coordinate of the monitoring region.

According to an embodiment, the obtaining of the pose information may include: calculating a relative angle for estimating a movement direction of the target aircraft on the basis of the first coordinate and the second coordinate; and estimating relative pose information and movement direction information of the target aircraft based on the image photographing device on the basis of a sign of the relative angle.

According to an embodiment, the generating of the flight guidance command may include: determining a predicted movement path of the target aircraft and a impact point of the target aircraft on the basis of the tracking information of the image photographing device and the pose information of the target aircraft; and generating velocity vector command for tracking and striking the target aircraft on the basis of the predicted movement path of the target aircraft and the impact point of the target aircraft.

According to an embodiment, the generating of the flight guidance command may include generating the flight guidance command on the basis of a mode corresponding to a range of the relative angle when a frame of which the relative angle has the same sign is continuously detected for more than a predetermined number from the photographed image.

According to an embodiment, the generating of the flight guidance command may include: determining the mode as a first mode that is a first state without left-right movement of the target aircraft when an absolute value of the relative angle is within a threshold value; and generating first velocity vector command for tracking and striking the target aircraft on the basis of the tracking information of the image photographing device according to the first mode.

According to an embodiment, the generating of the flight guidance command may include: determining the mode as a second mode that is a second state with left or right movement of the target aircraft when the absolute value of the relative angle exceeds a threshold value; and generating second velocity vector command for tracking and striking the target aircraft on the basis of the tracking information of the image photographing device and the pose information of the target aircraft according to the second mode.

According to another aspect, an aircraft including: a communication device; an image photographing device; a processor; and a memory that stores commands that may be executed by the processor, wherein the processor, by executing the commands, detects a target aircraft on the basis of an image photographed through the image photographing device, controls the image photographing device to track the target aircraft and obtains tracking information of the image photographing device on the basis of a region of the target aircraft in the photographed image and a central point inside the photographed image, obtains pose information of the target aircraft on the basis of the photographed image, and generates a flight guidance command for tracking and striking the target aircraft on the basis of the tracking information of the image photographing device and the pose information of the target aircraft.

According to an embodiment, the processor, by executing the commands, may set a monitoring region that includes the region of the target aircraft in the photographed image, and control the image photographing device so as to minimize an error between a central point of the monitoring region and the central point inside the photographed image.

According to an embodiment, the processor, by executing the commands, may obtain coordinate information on predetermined positions of the target aircraft on the basis of a monitoring region including the region of the target aircraft in the photographed image, and obtain velocity information including movement speed information and movement direction information of the target aircraft based on the image photographing device on the basis of the coordinate information.

According to an embodiment, the processor, by executing the commands, may calculate a first coordinate representing a top-left coordinate that is the farthest from a central coordinate of the monitoring region, and calculate a second coordinate representing a top-right coordinate that is the farthest from the central coordinate of the monitoring region.

According to an embodiment, the processor, by executing the commands, may calculate a relative angle for estimating a movement direction of the target aircraft on the basis of the first coordinate and the second coordinate, and estimate relative pose information and movement direction information of the target aircraft based on the image photographing device on the basis of a sign of the relative angle.

According to an embodiment, the processor, by executing the commands, may generate the flight guidance command on the basis of a mode corresponding to a range of the relative angle when a frame of which the relative angle has the same sign is continuously detected for more than a predetermined number of times from the photographed image.

According to an embodiment, the processor, by executing the commands, may determine the mode as a first mode that is a first state without left-right movement of the target aircraft when an absolute value of the relative angle is within a threshold value, and generate first velocity vector command for tracking and striking the target aircraft on the basis of the tracking information of the image photographing device according to the first mode.

According to an embodiment, the processor, by executing the commands, may determine the mode as a second mode that is a second state with left or right movement of the target aircraft when the absolute value of the relative angle exceeds a threshold value, and generate second velocity vector command for tracking and striking the target aircraft on the basis of the tracking information of the image photographing device and the pose information of the target aircraft according to the second mode.

According to still another aspect, a computer program that is stored in a computer-readable storage medium for executing a method of operating an aircraft, wherein the method of operating the aircraft includes: detecting a target aircraft on the basis of an image photographed through an image photographing device; controlling the image photographing device to track the target aircraft and obtaining tracking information of the image photographing device on the basis of a region of the target aircraft in the photographed image and a central point inside the photographed image; obtaining pose information of the target aircraft on the basis of the photographed image; and generating a flight guidance command for tracking and striking the target aircraft on the basis of the tracking information of the image photographing device and the pose information of the target aircraft is provided.

### [Advantageous Effects]

The present invention can provide an aircraft capable of automatically detecting an illegal aircraft and quickly and accurately tracking and striking the illegal aircraft on the basis of tracking information of an image photographing device and pose information of the illegal aircraft, and a method of operating the same.

### [Description of Drawings]

The present disclosure can be readily understood by a combination of the following detailed description and the accompanied drawings, wherein reference numerals refer to structural elements.
FIG. 1 is a conceptual view for describing an operation for an aircraft to track and strike a target aircraft according to an embodiment.
FIG. 2 is a flowchart showing a method of operating an aircraft according to an embodiment.
FIG. 3 is a view for describing a process of controlling an image photographing device to track a target aircraft according to an embodiment.
FIG. 4 is a view for describing a coordinate system of an aircraft according to an embodiment.
FIG. 5A is a view for describing a process of obtaining tracking information of a target aircraft for an aircraft according to an embodiment, and FIG. 5B is a view for describing a process of calculating velocity vector command of the target aircraft using the tracking information of the target aircraft according to an embodiment.
FIG. 6 is a view for describing a process in which an aircraft performs a flight according to a flight guidance command and tracks a target aircraft according to an embodiment.
FIG. 7 is a view for describing a process of obtaining pose information of a target aircraft according to an embodiment.
FIG. 8 is a view for describing a process in which a target aircraft binarizes a photographed image according to an embodiment.
FIG. 9 is a view for describing a process of calculating a coordinate for a feature point of a target aircraft and calculating a relative angle according to an embodiment.
FIG. 10 is a view for describing a process of obtaining pose information of a target aircraft on the basis of a sign of a relative angle according to an embodiment.
FIG. 11 is a view for describing a result of comparing a case of obtaining velocity vector command of a target aircraft using tracking information of an image photographing device and a case of obtaining the velocity vector command of the target aircraft using the tracking information of the image photographing device and pose information of the target aircraft according to an embodiment.
FIG. 12 is a view for describing a process of obtaining velocity vector command on the basis of tracking information of an image photographing device and pose information of a target aircraft according to an embodiment.
FIG. 13 is a block diagram showing a configuration of an aircraft according to an embodiment.

### [Modes of the Invention]

Hereinafter, various embodiments will be described in detail with reference to the drawings. The embodiments described below may be modified and implemented in various different forms. In order to more clearly describe the features of the embodiments, detailed description of matters that are widely known to those having ordinary skill in the art to which the embodiments below pertains are omitted.

Meanwhile, when it is described herein that a configuration is "connected" to another configuration, this includes not only a case in which it is "directly connected" but also a case in which it is "connected with another configuration in between". In addition, when a configuration is described to "include" another configuration, this does not mean that it excludes other configurations, but rather that it may further include other configurations unless specifically stated otherwise.

In addition, terms including ordinal numbers such as 'first' or 'second' used herein may be used to describe various components, but the components should not be limited by the terms. The terms are used solely to distinguish one component from another.

In the present specification, "aircraft" may refer to a vehicle or machine with wings or propellers capable of flying such as drone. In addition, the aircraft may refer to a manned aerial vehicle or an unmanned aerial vehicle. In addition, the aircraft may refer to an aerial vehicle that is operated by a pilot on board or without a pilot on board by a program that controls the flight automatically/semi-automatically from the ground.

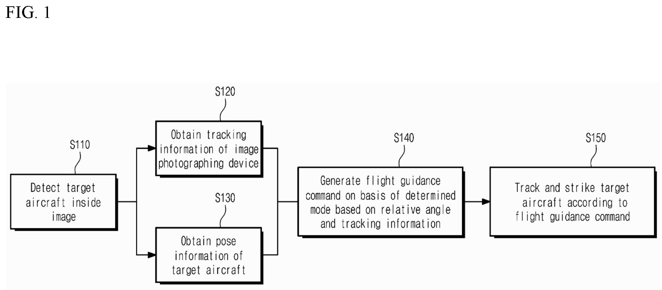

Hereinafter, specific embodiments of the present invention described above will be described with reference to FIG. 1 to FIG. 13.

FIG. 1 is a conceptual view for describing an operation for an aircraft 10 to track and strike a target aircraft 20 according to an embodiment.

Referring to FIG. 1, in step S110, the aircraft 10 may detect the target aircraft 20 inside an image photographed through an image photographing device 1320. For example, the aircraft 10 may detect the target aircraft 20 inside the image using a model that detects an object.

The target aircraft (20) may be, for example, a drone, but the technical idea of the present disclosure is not limited thereto, and the target aircraft (20) may be various unmanned aircraft such as a VTOL (Vertical Takeoff and Landing) or a Fixed-Wing.

In step S120, the aircraft 10 may obtain tracking information of the image photographing device 1320. When the target aircraft 20 is detected inside the image, the aircraft 10 may control a direction and focus of the image photographing device 1320 on the basis of the tracking information so as to continuously track the target aircraft 20. For example, the tracking information may include relative altitude information and relative direction information on the target aircraft 20 based on the aircraft 10.

In step S130, the aircraft 10 may obtain pose information of the target aircraft 20. For example, the aircraft 10 may extract feature points corresponding to the target aircraft 20 inside the photographed image and calculate a relative angle for estimating a movement direction of the target aircraft 20 on the basis of information of the extracted feature points. The aircraft 10 may obtain the pose information of the target aircraft 20 which includes relative pose information and movement direction information of the target aircraft 20 on the basis of the relative angle.

In step S140, the aircraft 10 may generate a flight guidance command on the basis of a mode determined based on the relative angle and on the basis of the tracking information. For example, the aircraft 10 may determine a response mode according to a range of the relative angle and generate the flight guidance command on the basis of the response mode and the tracking information.

In step S150, the aircraft 10 may perform tracking and striking of the target aircraft 20 according to the flight guidance command.

For convenience of explanation, the above description describes a single aircraft (10) tracking and shooting down a target aircraft (20). However, the technical concept of the present disclosure is not limited thereto, and two or more aircraft (10) may also track and shoot down a target aircraft (20). When two or more aircraft (10) are used, each aircraft (10) maintains autonomy and can share information in real time through a centralized or decentralized control method. This allows for complex missions, such as precision strikes against the target aircraft (20) and simultaneous attacks. When two or more aircraft (10) are used to cooperatively perform a mission, the two or more aircraft (10) may be referred to as a swarm drone.

Furthermore, the present invention can be used not only as a technology for shooting down target aircraft (20) from a defensive perspective, but can also be extended to an offensive perspective. For example, the present invention can be applied to detecting, shooting down, or attacking moving or stationary targets located on the ground or in the air using one or more aircraft (10) (including swarm drones). In other words, the present invention can be applied not only to military and security fields, but also in situations where targets must be effectively neutralized or eliminated.

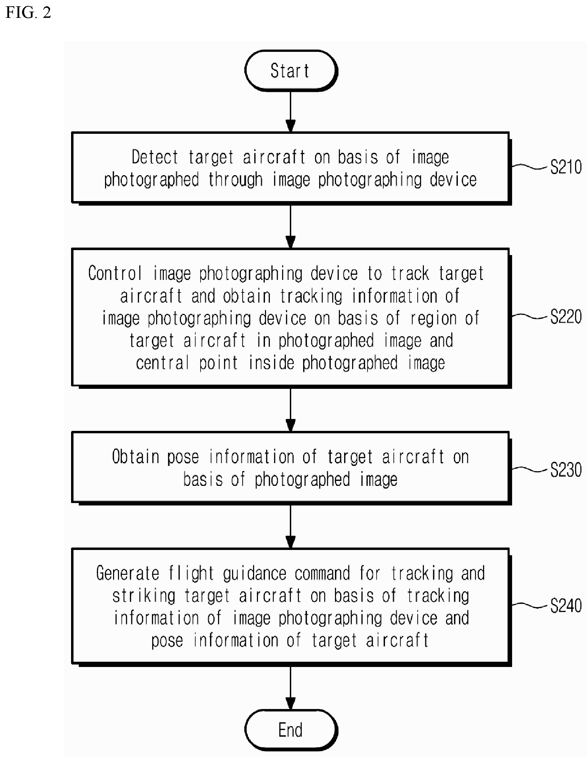

FIG. 2 is a flowchart showing a method of operating the aircraft 10 according to an embodiment.

The method of operating the aircraft (10) illustrated in FIG. 2 can be performed by at least one aircraft (10).

Referring to FIG. 2, in step S210, the aircraft 10 may detect the target aircraft 20 on the basis of the image photographed through the image photographing device 1320. The image photographing device 1320 may be equipped on the aircraft 10 and may photograph the image from various angles by adjusting left-right directions, upward-downward directions, and left-right tilt of the image photographing device 1320 using three axes which are a roll axis, a pitch axis, and a yaw axis. For example, the target aircraft 20 may be an illegal aircraft that is not permitted to fly. For example, the target aircraft 20 may be detected on the basis of a detection model that detects the illegal aircraft inside the image. For example, the detection model may be a model that is learned through artificial intelligence.

In step S220, the aircraft 10 may control the image photographing device 1320 to track the target aircraft 20 and obtain tracking information of the image photographing device 1320 on the basis of a region of the target aircraft 20 in the photographed image and a central point inside the photographed image.

For example, the aircraft 10 may set a monitoring region that includes the region of the target aircraft 20 in the photographed image. In order to track the target aircraft 20 intensively, the monitoring region may be set separately in the image. For example, the monitoring region may be set in a form of a bounding box based on a boundary and size of the target aircraft 20. In order for the aircraft 10 to quickly and accurately track the illegal aircraft, the aircraft 10 may control the image photographing device 1320 so as to minimize an error between a central point of the monitoring region and the central point inside the photographed image. For example, the aircraft 10 may control a rotation of the three axes of the image photographing device 1320 so that the central point of the monitoring region coincides with the central point inside the photographed image.

For example, the tracking information may be information obtained to detect the relative position and relative direction between the aircraft 10 and the illegal aircraft while the image photographing device 1320 tracks the illegal aircraft. For example, the tracking information may include the relative altitude information on the target aircraft 20 based on the aircraft 10 and the relative direction information on the target aircraft 20 based on the aircraft 10. For example, the relative altitude information may be obtained on the basis of an angle of the pitch axis of the image photographing device 1320. In addition, the relative direction information may be obtained on the basis of an angle of the yaw axis of the image photographing device 1320.

In step S230, the aircraft 10 may obtain the pose information of the target aircraft 20 on the basis of the photographed image. Here, the pose information may represent the relative pose information and the movement direction information of the target aircraft 20 based on the aircraft 10 or the image photographing device 1320.

For example, the aircraft 10 may obtain coordinate information on predetermined positions of the target aircraft 20 on the basis of the monitoring region including the region of the target aircraft 20 in the photographed image. For example, the aircraft 10 may obtain velocity information that includes movement speed information and movement direction information of the target aircraft 20 based on the image photographing device 1320 on the basis of the coordinate information.

In a specific example, the aircraft 10 may calculate a first coordinate representing a top-left coordinate that is the farthest from a central coordinate of the monitoring region. The aircraft 10 may calculate a second coordinate representing a top-right coordinate that is the farthest from the central coordinate of the monitoring region.

For example, the aircraft 10 may calculate a relative angle for estimating the movement direction of the target aircraft 20 on the basis of the first coordinate and the second coordinate. The aircraft 10 may estimate relative pose information and the movement direction information of the target aircraft 20 based on the image photographing device 1320 on the basis of a sign of the relative angle.

In step S240, the aircraft 10 may generate the flight guidance command for tracking and striking the target aircraft 20 on the basis of the tracking information of the image photographing device 1320 and the pose information of the target aircraft 20.

For example, the aircraft 10 may determine a predicted movement path of the target aircraft 20 and a impact point of the target aircraft 20 on the basis of the tracking information of the image photographing device 1320 and the pose information of the target aircraft 20. For example, the impact point may be a part that affects flight stability of the target aircraft 20. Specifically, the impact point may be a propeller, a wing, or the like of the aircraft 10. The aircraft 10 may generate velocity vector command for tracking and striking the target aircraft 20 on the basis of the predicted movement path and the impact point of the target aircraft 20. The aircraft 10 may track the target aircraft 20 and strike the target aircraft 20 according to the flight guidance command that corresponds to the velocity vector command.

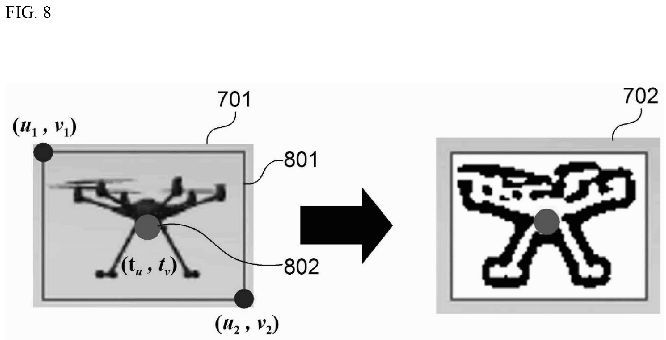

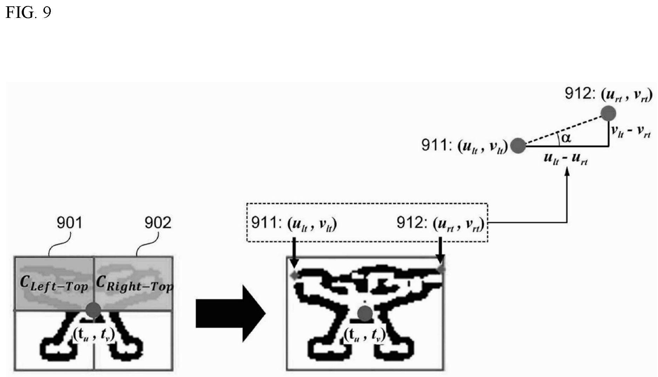

For example, the aircraft 10 may generate the flight guidance command on the basis of a mode corresponding to a range of the relative angle when a frame of which the relative angle has the same sign is continuously detected for more than a predetermined number from the photographed image. A process of calculating the relative angle will be described in detail in FIG. 8 and FIG. 9.

Specifically, the aircraft 10 may determine the mode as a first mode that is a first state without left-right movement of the target aircraft 20 when an absolute value of the relative angle is within a threshold value. The aircraft 10 may generate first velocity vector command for tracking and striking the target aircraft 20 on the basis of the tracking information of the image photographing device 1320 according to the first mode.

On the other hand, the aircraft 10 may determine the mode as a second mode that is a second state with left or right movement of the target aircraft 20 when the absolute value of the relative angle exceeds the threshold value. The aircraft 10 may generate second velocity vector command for tracking and striking the target aircraft 20 on the basis of the tracking information of the image photographing device 1320 and the pose information of the target aircraft 20 according to the second mode.

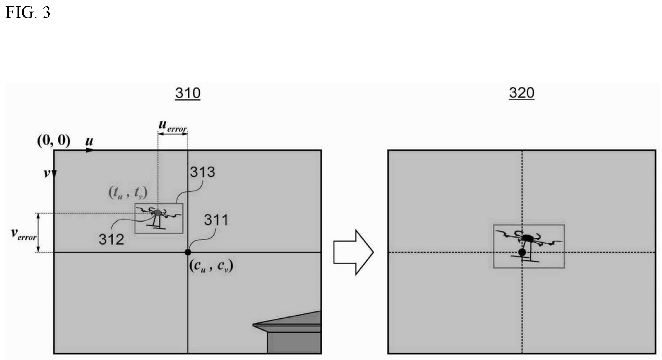

FIG. 3 is a view for describing a process of controlling the image photographing device 1320 to track the target aircraft 20 according to an embodiment.

Referring to FIG. 3, the aircraft 10 may photograph an image of a vicinity of the movement path through the image photographing device 1320 inside the aircraft 10. The aircraft 10 may detect the target aircraft 20 on the basis of the photographed image. Referring to an image 310 of FIG. 3, the aircraft 10 may set a monitoring region 313 that includes the region of the target aircraft 20 in the photographed image. Here, the monitoring region 313 may be set by an input of a user or by an artificial intelligence model that detects the target aircraft. The aircraft 10 may extract a central point 311 inside the image. For example, a coordinate value of the central point 311 inside the image may be (*cᵤ*, *cᵥ*). In addition, the aircraft 10 may extract a central point 312 inside the monitoring region 313. A coordinate value of the central point 312 inside the monitoring region 313 may be (*tᵤ*, *tᵥ*). The aircraft 10 may control the image photographing device 1320 so as to minimize an error between the central point 312 inside the monitoring region 313 and the central point 311 inside the image. Specifically, the error between the central point 311 and the central point 312 may be calculated as in Equation 1. [Equation 1] $\left({u}_{error}, {v}_{error}\right) = \left({c}_{u}-{t}_{u}, {c}_{v}-{t}_{v}\right)$

For example, the image photographing device 1320 may photograph the image using the three axes which are the roll axis, the pitch axis, and the yaw axis. By using the three axes, the image photographing device 1320 may stably photograph the image even in a situation with vibration or movement of aircraft 10.

Referring to an image 320 of FIG. 3, the aircraft 10 may control the image photographing device 1320 so that the central point 312 inside the monitoring region 313 and the central point 311 inside the image coincide with each other.

Specifically, the aircraft 10 may calculate (*G_{pitch}*, *G_{yaw}*) that is a value of pulse width modulation (PWM) for each axis based on proportional-integral-derivative (PID) using a value of (*uₑᵣᵣₒᵣ, vₑᵣᵣₒᵣ*). The (*G_{pitch}*, *G_{yaw}*) value may be calculated according to Equation 2. Here, Equation 2 is an example of coinciding the central point 312 inside the monitoring region 313 and the central point 311 inside the image with each other through controlling of the pitch axis and the yaw axis. [Equation 2] $\begin{matrix}{G}_{pitch} = {K}_{p , pitch} {v}_{error} + {K}_{i , pitch} \int {v}_{error} dt + {K}_{d , pitch} \frac{{dv}_{error}}{dt} \\ {G}_{yaw} = {K}_{p , yaw} {u}_{error} + {K}_{i , yaw} \int {u}_{error} dt + {K}_{d , yaw} \frac{{du}_{error}}{dt}\end{matrix}$

Here, *K*_{p,pitch}, *K*_{i,pitch}, *K*_{d,pitch} *K_{p,yaw}* , *K_{i,yaw} K_{d,yaw}* are tuning parameters.

The calculated (*G_{pitch}, G_{yaw}*) values are transferred to the image photographing device 1320, and the image photographing device 1320 may operate so that the central point 312 inside the monitoring region 313 and the central point 311 inside the image coincide with each other using the (*G_{pitch}*, *G_{yaw}*) values.

Meanwhile, the central point 312 inside the monitoring region 313 and the central point 311 inside the image may be coincided with each other through controlling of at least two axes among the roll axis, the pitch axis, and the yaw axis configured in the image photographing device 1320. In this case, an equation used may be expressed differently from Equation 2 according to the type and number of axes used for controlling.

Although the process of controlling the image photographing device (1320) to track a target aircraft (20) is described in FIG. 3, the technical concepts of the present disclosure are not limited thereto, and the process of tracking a target can be utilized for purposes other than national defense. For example, it can also be utilized for general object tracking, such as tracking people, objects, or moving vehicles.

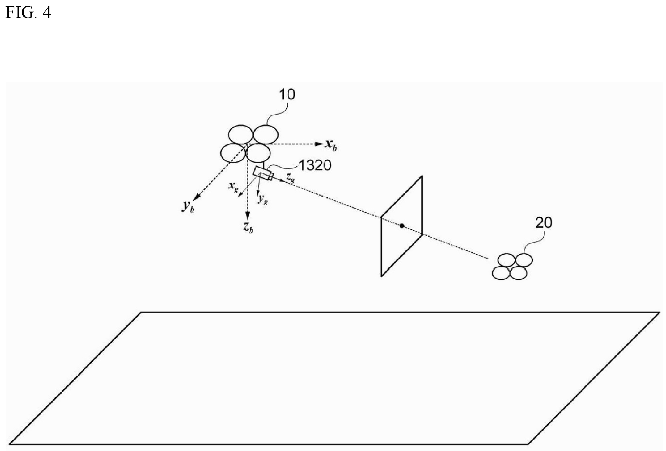

In addition, the method for detecting and tracking a target aircraft (20) in the present disclosure is not limited to detecting and tracking a target based on RGB images, and can also be utilized for IR images. When IR images are utilized, the target aircraft (20) can be accurately detected and tracked even at night or in poor weather conditions. For example, a mode switch from RGB images to IR images can be performed at night or in cloudy weather. Fig. 4 is a diagram illustrating a coordinate system of an aircraft (10) according to one embodiment. FIG. 4 is a view for describing a coordinate system of the aircraft 10 according to an embodiment.

Referring to FIG. 4, the aircraft 10 may photograph the target aircraft 20 through the image photographing device 1320 while continuously tracking the target aircraft 20. In this case, the aircraft 10 and the image photographing device 1320 may use different coordinate systems from each other, and the coordinate system of the aircraft 10 and the coordinate system of the image photographing device 1320 are as follows.

The coordinate system of the aircraft 10 may be expressed as *F_{b}* = (*x_{b}, y_{b}*, *z_{b}*) and a direction of a *x_{b}* axis may represent a heading direction of the aircraft 10, a direction of a *y_{b}* axis may represent a right direction of the aircraft 10, and a direction of a *z_{b}* axis may represent a downward direction of the aircraft 10.

In addition, the coordinate system of the image photographing device 1320 may be expressed as *F_{g}* = (*x_{g}*, *y_{g}*, *z_{g}*) and a direction of a *x_{g}* axis may represent a right direction of the image photographing device 1320, a direction of a *y_{g}* axis may represent a downward direction of the image photographing device 1320, and a direction of a *z_{g}* axis may represent a forward direction of the image photographing device 1320.

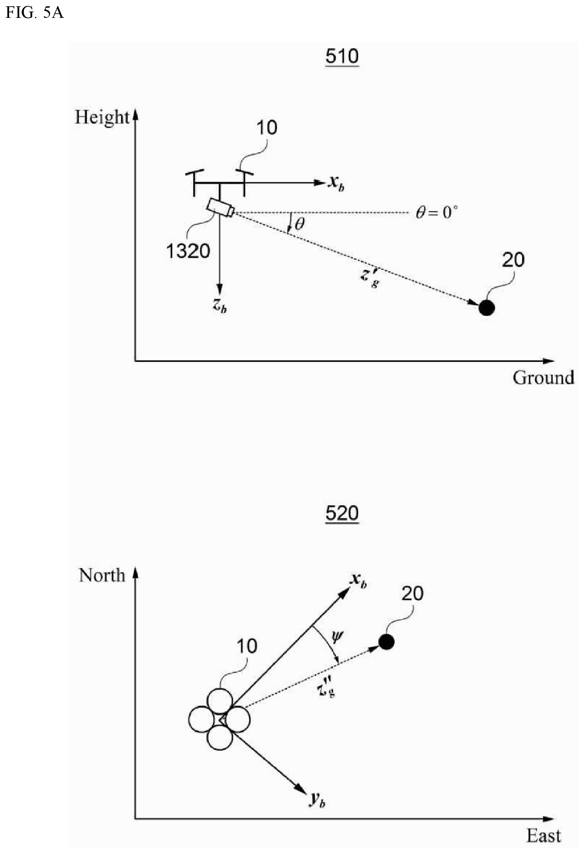

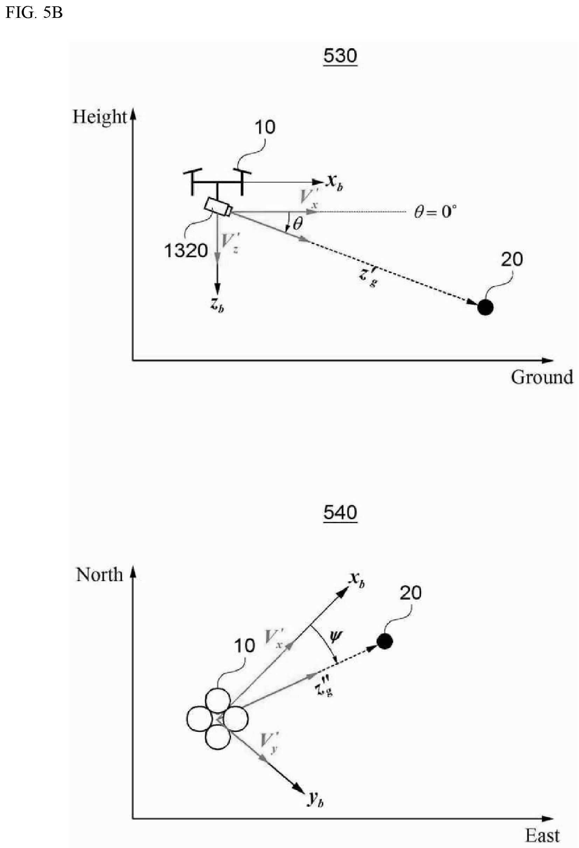

FIG. 5A is a view for describing a process of obtaining tracking information of the target aircraft 20 for the aircraft 10 according to an embodiment, and FIG. 5B is a view for describing a process of calculating velocity vector command of the target aircraft 20 using the tracking information of the target aircraft 20 according to an embodiment.

The tracking information may include the relative altitude information on the target aircraft 20 based on the aircraft 10 and the relative direction information of the target aircraft 20 based on the aircraft 10.

An image 510 of FIG. 5A represents a side view of the aircraft 10 viewed in a side direction, and an image 520 of FIG. 5A represents a cross-sectional view of the aircraft 10 viewed from the top. Here, *θ* represents an angle from *x_{b}* to ${z}_{g}^{′}$, and *ψ* represents an angle from *x_{b}* to ${z}_{g}^{"}$. *θ* may represent an angle of the pitch axis of the image photographing device 1320, and *ψ* may represent an angle of the yaw axis of the image photographing device 1320.

In addition, information of the target aircraft 20 may be obtained on the basis of information of *θ* and *ψ* angles. Specifically, *θ* represents relative altitude of the target aircraft 20 based on the aircraft 10, and when *θ* > 0, it may represent that the target aircraft 20 is at an altitude lower than that of the aircraft 10. In addition, *ψ* represents a relative direction of the target aircraft 20 based on the aircraft 10, and when *ψ* > 0, it may represent that target aircraft 20 is positioned on the right side based on the heading of the aircraft 10.

For example, the aircraft 10 may generate the flight guidance command for tracking and striking the target aircraft 20 on the basis of the tracking information of the image photographing device 1320. In this case, the aircraft 10 may calculate the velocity vector command of the target aircraft 20 on the basis of the tracking information.

For example, referring to an image 530 and an image 540 of FIG. 5B, the aircraft 10 may generate a linear velocity vector according to Equation 3 and Equation 4 on the basis of pitch (*θ*) and yaw (*ψ*) angle information. [Equation 3] ${\vec{V}}_{linear}^{′} = {\left[{V}_{x}^{′} {V}_{y}^{′} {V}_{z}^{′}\right]}^{T}$ [Equation 4] $\begin{matrix}{V}_{x}^{′} = {V}_{max} ⋅ cos θ ⋅ cos ψ \\ {V}_{y}^{′} = {V}_{max} ⋅ sinψ ⋅ cos θ \\ {V}_{z}^{′} = {V}_{max} ⋅ sinθ\end{matrix}$

Here, *Vₘₐₓ* is a maximum velocity of the aircraft 10.

In addition, referring to the image 540 of FIG. 5B, the aircraft 10 may generate an angular velocity vector according to Equation 5 and Equation 6 on the basis of yaw (*ψ*) angle information. [Equation 5] ${\vec{V}}_{angular}^{′} = {\left[p′ q′ r′\right]}^{T}$ [Equation 6] $\begin{matrix}p ′ = 0 \\ q ′ = 0 \\ r ′ = {K}_{p , heading} ψ + {K}_{i , heading} \int ψ dt + {K}_{d , heading} \frac{dψ}{dt}\end{matrix}$

Here, *K_{p,heading} , K_{i,heading}, K_{d,heading}* are tuning parameters.

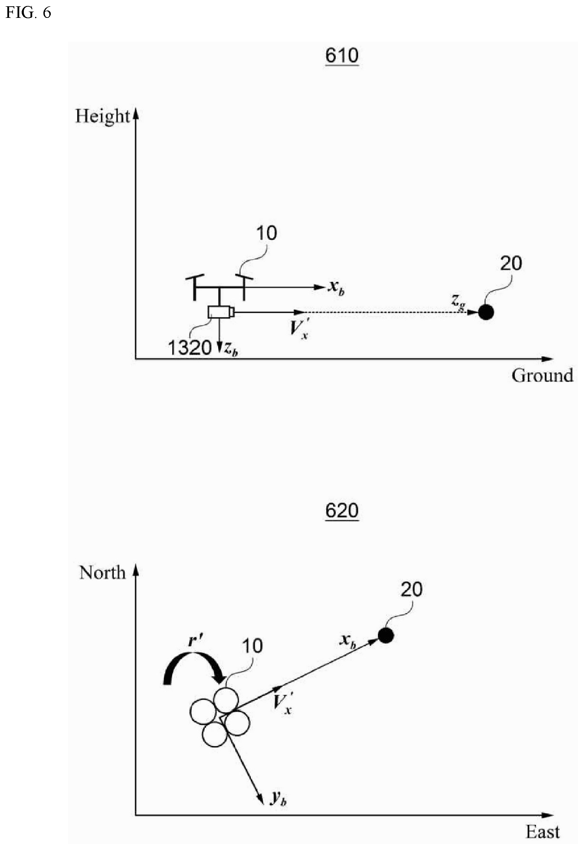

FIG. 6 is a view for describing a process in which the aircraft 10 performs a flight according to the flight guidance command and tracks the target aircraft 20 according to an embodiment.

The aircraft 10 may perform a flight according to the velocity vector command for tracking and striking the target aircraft 20. FIG. 6 shows a view of the aircraft 10 tracking the target aircraft 20 according to the flight guidance command that includes the velocity vector command. Specifically, an image 610 of FIG. 6 represents a side view of the aircraft 10 viewed in a side direction, and an image 620 of FIG. 6 represents a cross-sectional view of the aircraft 10 viewed from the top.

For example, while the aircraft 10 is tracking the target aircraft 20 according to the flight guidance command, the central point inside the image photographed in the image photographing device 1320 and the central point inside the monitoring region including the image of the target aircraft 20 may be coincided.

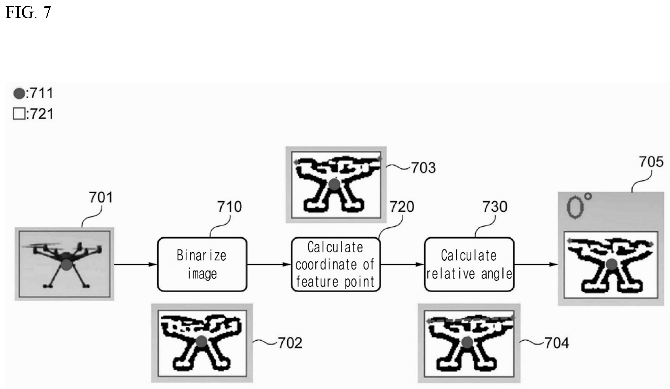

FIG. 7 is a view for describing a process of obtaining the pose information of the target aircraft 20 according to an embodiment.

The aircraft 10 may detect the target aircraft 20 from an image 701 photographed through the image photographing device 1320. The aircraft 10 may set a region in which the target aircraft 20 is included in the image 701 as a monitoring region 721. In this case, in order for the aircraft 10 to continuously track the target aircraft 20, an operation of the image photographing device 1320 may be controlled so that the central point 711 inside the monitoring region 721 and the central point inside the image 701 coincide with each other.

In step S710, the aircraft 10 may perform image binarization for the monitoring region 721 including the target aircraft 20. A binarization process is performed to extract a shape of the target aircraft 20 inside the monitoring region 721 and a binarized image 702 may be generated. An image binarization process is described in detail in FIG. 8.

In step S720, the aircraft 10 may calculate the coordinate information for the feature points corresponding to the predetermined positions of the target aircraft 20. For example, referring to an image 703, the first coordinate representing the top-left coordinate that is the farthest from the central coordinate of the monitoring region and the second coordinate representing the top-right coordinate that is the farthest from the central coordinate of the monitoring region may be calculated. The process of calculating the coordinate information will be described in detail in FIG. 9.

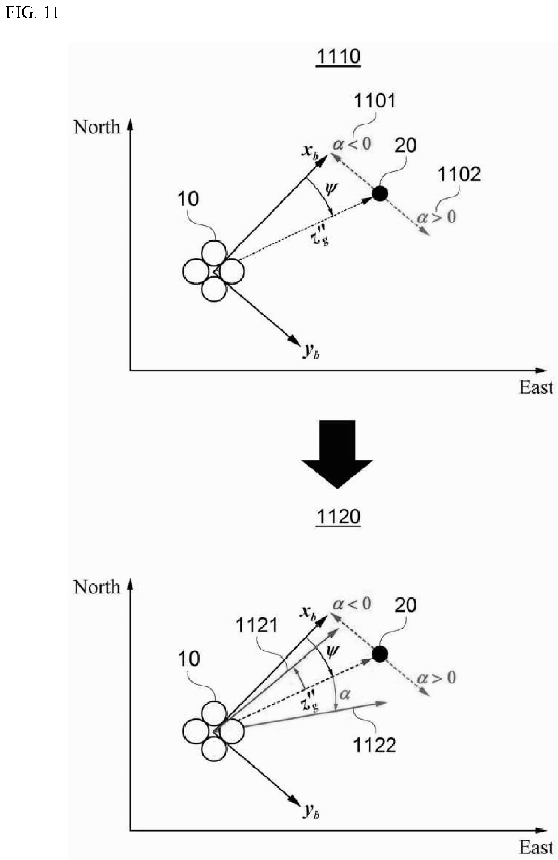

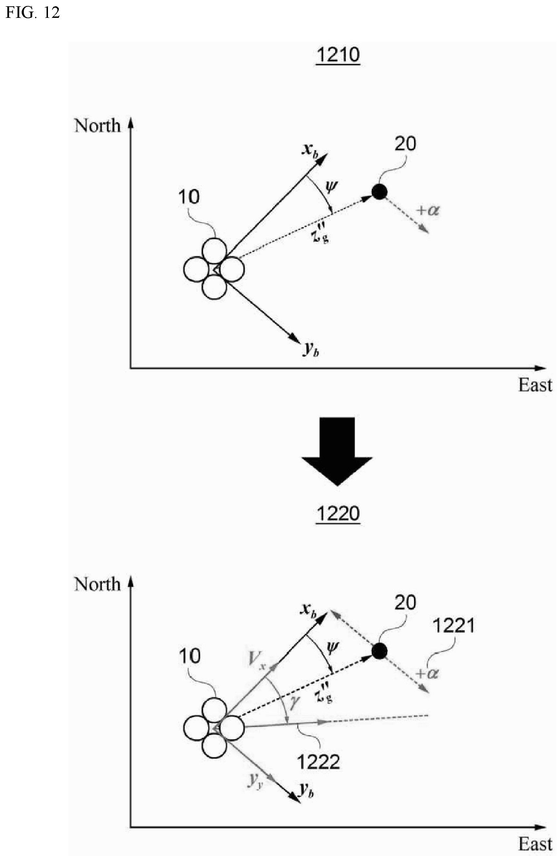

In step S730, referring to an image 704 and an image 705, the aircraft 10 may calculate the relative angle for estimating the movement direction of the target aircraft 20 on the basis of the first coordinate and the second coordinate. The process of calculating the relative angle will be described in FIG. 9. The aircraft 10 may generate the flight guidance command on the basis of the pose information and the tracking information of the target aircraft 20. A process of generating the flight guidance command will be described in detail in FIG. 11 and FIG. 12.

FIG. 8 is a view for describing a process in which the target aircraft 20 binarizes a photographed image according to an embodiment.

Referring to FIG. 8, a monitoring region 801 including the region of the target aircraft 20 in the image 701 photographed in the image photographing device 1320 may be set. Here, the monitoring region 801 may be set in the form of the bounding box based on the boundary and size of the target aircraft 20. In order to extract the shape of the target aircraft 20, binarization of a region in a top-left coordinate (*u*₁, *v*₁) and a bottom-right coordinate (*u*₂ , *v*₂) of the monitoring region 801 may be performed. The top-left coordinate may be calculated as a coordinate that is the farthest from a central coordinate 802 of the monitoring region 801, and a bottom-right coordinate may be calculated as a coordinate that is the farthest from the central coordinate 802 of the monitoring region 802.

A set of pixels representing the shape of the target aircraft 20 in a binarized pixel value may be defined as shown in Equation 7, and the image 702 may be generated by binarization processing according to Equation 8. [Equation 7] $C = \left\{\left(u, v\right)\left|Image\left(u, v\right)\right.=0\right\}$ [Equation 8] $Image \left(u, v\right) = \left\{\begin{matrix}255 , & if \left(u, v\right) is White \\ 0 , & if \left(u, v\right) is Black\end{matrix}\right.$

FIG. 9 is a view for describing a process of calculating a coordinate for a feature point of the target aircraft 20 and calculating the relative angle according to an embodiment.

Referring to FIG. 9, the binarized image 702 may be divided into four based on the central coordinate (*tᵤ*, *tᵥ*). Here, the image-processed image 702 may be an image for the monitoring region 802 described in FIG. 8. Among C set, a top-left region 901 and a top-right region 902 may be extracted according to Equation 9.

[Equation 9] $\begin{matrix}{C}_{Left - Top} = \left\{\left(u, v\right)∈C\left|\left(u\leq {t}_{u}\right)∧\left(v\leq {t}_{v}\right)\right.\right\} \\ {C}_{Right - Top} = \left\{\left(u, v\right)∈C\left|\left(u>{t}_{u}\right)∧\left(v\leq {t}_{v}\right)\right.\right\}\end{matrix}$

In addition, a first coordinate (*uₗₜ*, *vₗₜ*) representing a top-left coordinate 911 that is the farthest from the central coordinate (*tᵤ, tᵥ*) of the image 702 and a second coordinate (*uᵣₜ*, *vᵣₜ*) representing a top-right coordinate 912 that is the farthest from the central coordinate (*tᵤ, tᵥ*) of the image 702 may be calculated according to Equation 10. [Equation 10] $\begin{matrix}\left({u}_{lt}, {v}_{lt}\right) = arg {max}_{\left(u, v\right) ∈ {C}_{Left - Top}} \sqrt{{\left(u-{c}_{u}\right)}^{2} + {\left(v-{c}_{v}\right)}^{2}} \\ \left({u}_{rt}, {v}_{rt}\right) = arg {max}_{\left(u, v\right) ∈ {C}_{Right - Top}} \sqrt{{\left(u-{c}_{u}\right)}^{2} + {\left(v-{c}_{v}\right)}^{2}}\end{matrix}$

The relative angle for estimating the movement direction of the target aircraft 20 based on the image photographing device 1320 on the basis of the first coordinate 911 and the second coordinate 912 may be calculated according to Equation 11. [Equation 11] $α = {tan}^{- 1} \left(\frac{{v}_{lt} - {v}_{rt}}{{u}_{lt} - {u}_{rt}}\right)$

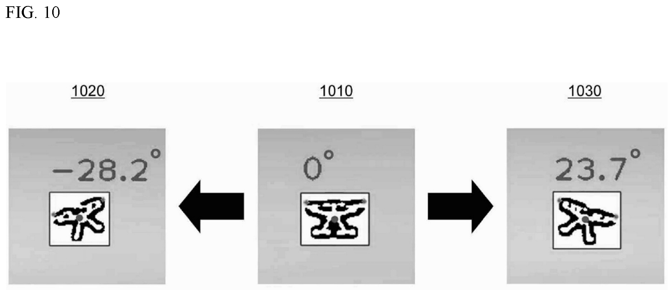

FIG. 10 is a view for describing a process of obtaining the pose information of the target aircraft 20 on the basis of the sign of the relative angle according to an embodiment.

On the basis of the sign of the relative angle calculated according to Equation 11 in FIG. 9, the relative pose information and the movement direction information of the target aircraft 20 may be estimated. For example, referring to an image 1010 in FIG. 10, when a value of the relative angle is 0, a state of the target aircraft 20 may be determined to be a state without left-right movement. For another example, referring to an image 1020 in FIG. 10, when the sign of the relative angle is negative, the state of the target aircraft 20 may be determined to be a state of moving to the left. For yet another example, referring to an image 1030 in FIG. 10, when the sign of the relative angle is positive, the state of the target aircraft 20 may be determined to be a state of moving to the right.

FIG. 11 is a view for describing a result of comparing a case of obtaining the velocity vector command of the target aircraft 20 using the tracking information of the image photographing device 1320 and a case of obtaining the velocity vector command of the target aircraft 20 using the tracking information of the image photographing device 1320 and the pose information of the target aircraft 20 according to an embodiment.

An image 1110 of FIG. 11 represents a cross-sectional view viewed from the top of the aircraft 10 as described in FIG. 5A. Here, *ψ* represents an angle from *x_{b}* to ${z}_{g}^{"}$. *ψ* represents a relative direction of the target aircraft 20 based on the aircraft 10, and when *ψ* > 0, it may represent that the target aircraft 20 is positioned on the right side of the heading of the aircraft 10.

Here, as *ψ* does not consider a next estimated position of the target aircraft 20, in order for the aircraft 10 to track and strike the target aircraft 20, not only the tracking information of the image photographing device 1320 including information of *ψ*, but also the pose information of the target aircraft 20 may be considered together. Here, the pose information of the target aircraft 20 may include the relative pose information and the movement direction information of the target aircraft 20 based on the image photographing device 1320. The relative pose information and the movement direction information may be determined on the basis of the relative angle.

For example, when the sign of the relative angle is negative (1101), the next estimated position of the target aircraft 20 may be positioned on a path in a left direction. For another example, when the sign of the relative angle is positive (1102), the next estimated position of the target aircraft 20 may be positioned on a path in a right direction.

An image 1120 of FIG. 11 represents a cross-sectional view viewed from the top of the aircraft 10 and represents a velocity vector determined on the basis of the pose information and the tracking information of the target aircraft 20.

For example, when the sign of the relative angle is negative (1101), a velocity vector 1121 may be generated by considering the next estimated position of the target aircraft 20 on the path in the left direction. For another example, when the sign of the relative angle is positive (1102), a velocity vector 1122 may be generated by considering the next estimated position of the target aircraft 20 on the path in the right direction. A generation process of the velocity vector will be described in FIG. 12. By generating the velocity vector in consideration of the next estimated position of the target aircraft 20, a time for the aircraft 10 to strike the target aircraft 20, hit accuracy, and hit success rate may be increased.

FIG. 12 is a view for describing a process of obtaining the velocity vector command on the basis of the tracking information of the image photographing device 1320 and the pose information of the target aircraft 20 according to an embodiment.

Referring to an image 1210 of FIG. 12, when the sign of the relative angle is positive (1102), the aircraft 10 may generate the velocity vector command for tracking and striking the target aircraft 20 on the basis of the tracking information of the image photographing device 1320 and the pose information of the target aircraft 20.

Referring to an image 1220 of FIG. 12, the aircraft 10 may generate a linear velocity vector on the basis of pitch (*θ*) and γ angle information according to Equation 12 and Equation 13. [Equation 12] ${\vec{V}}_{linear} = {\left[{V}_{x} {V}_{y} {V}_{z}\right]}^{T}$ [Equation 13] $\begin{matrix}γ = ψ + {K}_{angle} α \\ {V}_{x} = {V}_{max} ⋅ cos \left(θ\right) ⋅ cos \left(γ\right) \\ {V}_{y} = {V}_{max} ⋅ sin \left(γ\right) ⋅ cos \left(θ\right) \\ {V}_{z} = {V}_{max} ⋅ sinθ\end{matrix}$

Here, *Vₘₐₓ* is the maximum speed of the aircraft 10 and *K_{angle}* is a predetermined gain value.

In addition, the aircraft 10 may generate an angular velocity vector on the basis of the γ angle information according to Equation 14 and Equation 15. [Equation 14] ${\vec{V}}_{angular} = {\left[p q r\right]}^{T}$ [Equation 15] $\begin{matrix}p = 0 \\ q = 0 \\ r = {K}_{p , heading} γ + {K}_{i , heading} \int γ dt + {K}_{d , heading} \frac{dγ}{dt}\end{matrix}$

Here, *K_{p,heading} , K_{i,heading}, K_{d,heading}* are tuning parameters.

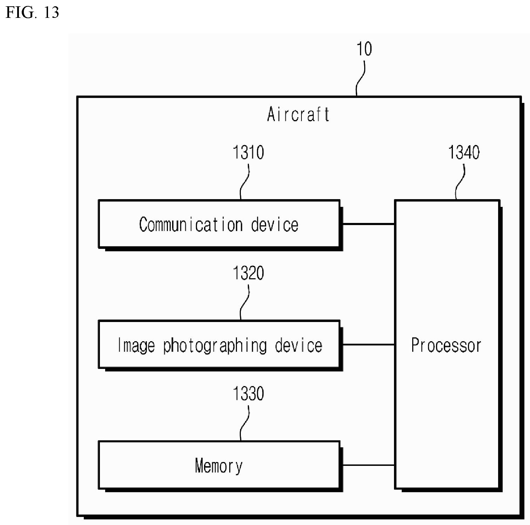

FIG. 13 is a block diagram showing a configuration of the aircraft 10 according to an embodiment.

Referring to FIG. 13, the aircraft 10 may include a communication device 1310, the image photographing device 1320, a memory 1330, and a processor 1340. However, not all of the illustrated components are essential components. The aircraft 10 may be implemented by more components than the illustrated components and the aircraft 10 may be implemented by fewer components than the illustrated components. Hereinafter, the components will be descried. The aircraft 10 illustrated in FIG. 13 may correspond identically to the aircraft 10 described in FIG. 1 to FIG 12.

The communication device 1310 may perform communication with an external device. For example, the communication device 1310 may be connected to a network via wire or wirelessly to perform the communication with the external device. Here, the external device may be an electronic device.

The communication device 1310 may include a communication module that supports one of various wired and wireless communication methods. The communication module may be a short-range communication module or a wired communication module.

The image photographing device 1320 may be equipped on the aircraft 10 and may photograph the image from various angles by adjusting left-right directions, upward-downward directions, and left-right tilt of the image photographing device 1320 using the three axes which are the roll axis, the pitch axis, and the yaw axis. The image photographing device 1320 may include a camera.

The image photographing device 1320 may obtain an image frame such as a still image or a moving image in a photographing mode. The image photographed through the image photographing device 1320 may be processed through the processor 1340.

The memory 1330 may store at least one program for causing the aircraft 10 to execute a method of operating the aircraft 10 in which the target aircraft 20 is detected through the image photographed through the image photographing device 1320 and the flight guidance command for tracking and striking the target aircraft 20 is generated on the basis of the tracking information of the image photographing device 1320 and the pose information of the target aircraft 20. At least one program stored in the memory 1330 may be classified into a plurality of modules according to a function.

The processor 1340 may control the overall operation of the aircraft 10 and include at least one processor 1340 such as a central processing unit (CPU). The processor 1340 may include at least one specialized processor 1340 corresponding to each function or may be a processor 1340 integrated into one.

The processor 1340 may execute a program stored in the memory 1330, read data or a file stored in the memory 1330, or store a new file in the memory 1330. In addition, the processor 1340 may execute commands stored in the memory 1330.

The processor 1340 may detect the target aircraft 20 on the basis of the image photographed through the image photographing device 1320. For example, the target aircraft 20 may be an illegal aircraft that is not permitted to fly. For example, the target aircraft 20 may be detected on the basis of the detection model that detects the illegal aircraft inside the image. For example, the detection model may be a model that is learned through artificial intelligence.

The processor 1340 may control the image photographing device 1320 to track the target aircraft 20 and obtain the tracking information of the image photographing device 1320 on the basis of a region of the target aircraft 20 in the photographed image and a central point inside the photographed image.

For example, the processor 1340 may set a monitoring region that includes the region of the target aircraft 20 in the photographed image. In order to track the target aircraft 20 intensively, the monitoring region may be set separately in the image. For example, the monitoring region may be set in a form of a bounding box based on a boundary and size of the target aircraft 20. In order for the aircraft 10 to quickly and accurately track the illegal aircraft, the processor 1340 may control the image photographing device 1320 so as to minimize an error between the central point of the monitoring region and the central point inside the photographed image. For example, the processor 1340 may control a rotation of at least two of the three axes of the image photographing device 1320 so that the central point of the monitoring region coincides with the central point inside the photographed image. For example, the image photographing device 1320 may control the rotation of the pitch axis and the yaw axis so that the central point of the monitoring region coincides with the central point inside the photographed image.

For example, the tracking information may be information obtained to detect the relative position and relative direction between the aircraft 10 and the illegal aircraft while the image photographing device 1320 tracks the illegal aircraft. For example, the tracking information may include the relative altitude information on the target aircraft 20 based on the aircraft 10 and the relative direction information of the target aircraft 20 based on the aircraft 10.

The processor 1340 may obtain the pose information of the target aircraft 20 on the basis of the photographed image. Here, the pose information may represent the relative pose information and the movement direction information of the target aircraft 20 based on the aircraft 10 or the image photographing device 1320.

For example, the processor 1340 may obtain the coordinate information on predetermined positions of the target aircraft 20 on the basis of the monitoring region including the region of the target aircraft 20 in the photographed image. For example, the processor 1340 may obtain velocity information that includes the movement speed information and movement direction information of the target aircraft 20 based on the image photographing device 1320 on the basis of the coordinate information.

In a specific example, the processor 1340 may calculate a first coordinate representing a top-left coordinate that is the farthest from a central coordinate of the monitoring region. The processor 1340 may calculate a second coordinate representing a top-right coordinate that is the farthest from the central coordinate of the monitoring region.

For example, the processor 1340 may calculate a relative angle for estimating the movement direction of the target aircraft 20 on the basis of the first coordinate and the second coordinate. The processor 1340 may estimate relative pose information and the movement direction information of the target aircraft 20 based on the image photographing device 1320 on the basis of the sign of the relative angle.

The processor 1340 may generate the flight guidance command for tracking and striking the target aircraft 20 on the basis of the tracking information of the image photographing device 1320 and the pose information of the target aircraft 20.

The processor 1340 may determine a predicted movement path of the target aircraft 20 and a impact point of the target aircraft 20 on the basis of the tracking information of the image photographing device 1320 and the pose information of the target aircraft 20. For example, the impact point may be a part that affects flight stability of the target aircraft 20. Specifically, the impact point may be a propeller, a wing, or the like of the aircraft 10. The processor 1340 may generate the velocity vector command for tracking and striking the target aircraft 20 on the basis of the predicted movement path and the impact point of the target aircraft 20. The processor 1340 may track the target aircraft 20 and strike the target aircraft 20 according to the flight guidance command that corresponds to the velocity vector command.

For example, the processor 1340 may generate the flight guidance command on the basis of a mode corresponding to a range of the relative angle when a frame of which the relative angle has the same sign is continuously detected for more than a predetermined number from the photographed image.

Specifically, the processor 1340 may determine the mode as a first mode that is a first state without left-right movement of the target aircraft 20 when an absolute value of the relative angle is within a threshold value. The processor 1340 may generate first velocity vector command for tracking and striking the target aircraft 20 on the basis of the tracking information of the image photographing device 1320 according to the first mode.

On the other hand, the processor 1340 may determine the mode as a second mode that is a second state with left or right movement of the target aircraft 20 when the absolute value of the relative angle exceeds the threshold value. The processor 1340 may generate second velocity vector command for tracking and striking the target aircraft 20 on the basis of the tracking information of the image photographing device 1320 and the pose information of the target aircraft 20 according to the second mode.

The aircraft 10 described herein may be implemented as a hardware component, a software component, and/or a combination of the hardware component and the software component. In addition, the present disclosure may be provided in a form of a computer program that is stored in a computer-readable storage medium so as to perform the method of operating the aircraft 10. In addition, the present disclosure may be programmed and be executed in a computer and be implemented in a general-purpose digital computer that operates such a program using the computer-readable storage medium.

The computer-readable storage medium may be read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tape, floppy disks, magneto-optical data storage devices, optical data storage devices, hard disks, solid-state disks (SSDs), and any device capable of storing commands or software, related data, data files, and data structures and capable of providing the commands or software, related data, data files, and data structures to the processor or the computer so that the processor or the computer may execute the commands.

Although the embodiments have been described in detail above, the scope of the present invention is not limited thereto, and various forms of modification and improvement made by those having ordinary skill in the art using the basic concept of the present invention defined in the following claims also fall within the scope of the present invention.

## Claims

1. A method of operating an aircraft (10), the method comprising:
detecting a target aircraft (20) on the basis of an image photographed through an image photographing device (1320) capable of photographing RGB image or IR image;
controlling the image photographing device (1320) to track the target aircraft (20) and obtaining tracking information of the image photographing device (1320) on the basis of a region of the target aircraft (20) in the photographed image and a central point inside the photographed image;
obtaining pose information of the target aircraft (20) on the basis of the photographed image; and
generating a flight guidance command for tracking and striking the target aircraft (20) on the basis of the tracking information of the image photographing device (1320) and the pose information of the target aircraft (20).

2. The method of claim 1, wherein the controlling of the image photographing device (1320) includes:
setting a monitoring region that includes the region of the target aircraft (20) in the photographed image; and
controlling the image photographing device (1320) so as to minimize an error between a central point of the monitoring region and the central point inside the photographed image.

3. The method of claim 1, wherein the tracking information includes relative altitude information of the target aircraft (20) based on the aircraft (10) and relative direction information of the target aircraft (20) based on the aircraft (10), and the target aircraft corresponds to at least one of MultiCopter, VTOL(Vertical Takeoff and Landing) and Fixed-Wing.

4. The method of claim 1, wherein the obtaining of the pose information of the target aircraft (20) includes:
obtaining coordinate information on predetermined positions of the target aircraft (20) on the basis of a monitoring region including the region of the target aircraft (20) in the photographed image; and
obtaining velocity information including movement speed information and movement direction information of the target aircraft (20) based on the image photographing device (1320) on the basis of the coordinate information.

5. The method of claim 4, wherein the obtaining of the coordinate information includes:
calculating a first coordinate representing a top-left coordinate that is the farthest from a central coordinate of the monitoring region; and
calculating a second coordinate representing a top-right coordinate that is the farthest from the central coordinate of the monitoring region.

6. The method of claim 5, wherein the obtaining of the pose information includes:
calculating a relative angle for estimating a movement direction of the target aircraft (20) on the basis of the first coordinate and the second coordinate; and
estimating relative pose information and movement direction information of the target aircraft (20) based on the image photographing device (1320) on the basis of a sign of the relative angle.

7. The method of claim 1, wherein the generating of the flight guidance command includes:
determining a predicted movement path of the target aircraft (20) and a impact point of the target aircraft (20) on the basis of the tracking information of the image photographing device (1320) and the pose information of the target aircraft (20); and
generating velocity vector command for tracking and striking the target aircraft (20) on the basis of the predicted movement path of the target aircraft (20) and the impact point of the target aircraft (20).

8. The method of claim 1, wherein the generating of the flight guidance command includes generating the flight guidance command on the basis of a mode corresponding to a range of the relative angle when a frame of which the relative angle has the same sign is continuously detected for more than a predetermined number from the photographed image.

9. The method of claim 8, wherein the generating of the flight guidance command includes:
determining the mode as a first mode that is a first state without left-right movement of the target aircraft (20) when an absolute value of the relative angle is within a threshold value; and
generating first velocity vector command for tracking and striking the target aircraft (20) on the basis of the tracking information of the image photographing device (1320) according to the first mode.

10. The method of claim 8, wherein the generating of the flight guidance command includes:
determining the mode as a second mode that is a second state with left or right movement of the target aircraft (20) when the absolute value of the relative angle exceeds a threshold value; and
generating second velocity vector command for tracking and striking the target aircraft (20) on the basis of the tracking information of the image photographing device (1320) and the pose information of the target aircraft (20) according to the second mode.

11. An aircraft (10) comprising:
a communication device (1310);
an image photographing device (1320);
a processor (1340); and
a memory (1330) that stores commands executed by the processor (1340),
wherein the processor (1340), by executing the commands,
detects a target aircraft (20) on the basis of an image photographed through the image photographing device (1320),
controls the image photographing device (1320) to track the target aircraft (20) and obtains tracking information of the image photographing device (1320) on the basis of a region of the target aircraft (20) in the photographed image and a central point inside the photographed image,
obtains pose information of the target aircraft (20) on the basis of the photographed image, and
generates a flight guidance command for tracking and striking the target aircraft (20) on the basis of the tracking information of the image photographing device (1320) and the pose information of the target aircraft (20).

12. The aircraft (10) of claim 11, wherein the processor (1340), by executing the commands,
sets a monitoring region that includes the region of the target aircraft (20) in the photographed image, and
controls the image photographing device (1320) so as to minimize an error between a central point of the monitoring region and the central point inside the photographed image.

13. The aircraft (10) of claim 11, wherein the processor (1340), by executing the commands,
obtains coordinate information on predetermined positions of the target aircraft (20) on the basis of a monitoring region including the region of the target aircraft (20) in the photographed image, and
obtains velocity information including movement speed information and movement direction information of the target aircraft (20) based on the image photographing device (1320) on the basis of the coordinate information.

14. The aircraft (10) of claim 13, wherein the processor (1340), by executing the commands,
calculates a first coordinate representing a top-left coordinate that is the farthest from a central coordinate of the monitoring region, and
calculates a second coordinate representing a top-right coordinate that is the farthest from the central coordinate of the monitoring region.

15. The aircraft (10) of claim 14, wherein the processor (1340), by executing the commands,
calculates a relative angle for estimating a movement direction of the target aircraft (20) on the basis of the first coordinate and the second coordinate, and
estimates relative pose information and movement direction information of the target aircraft (20) based on the image photographing device (1320) on the basis of a sign of the relative angle.

16. The aircraft (10) of claim 11, wherein the processor (1340), by executing the commands,
generates the flight guidance command on the basis of a mode corresponding to a range of the relative angle when a frame of which the relative angle has the same sign is continuously detected for more than a predetermined number of times from the photographed image.

17. The aircraft (10) of claim 16, wherein the processor (1340), by executing the commands,
determines the mode as a first mode that is a first state without left-right movement of the target aircraft (20) when an absolute value of the relative angle is within a threshold value, and
generates first velocity vector command for tracking and striking the target aircraft (20) on the basis of the tracking information of the image photographing device (1320) according to the first mode.

18. The aircraft (10) of claim 16, wherein the processor (1340), by executing the commands,
determines the mode as a second mode that is a second state with left or right movement of the target aircraft (20) when the absolute value of the relative angle exceeds a threshold value, and
generates second velocity vector command for tracking and striking the target aircraft (20) on the basis of the tracking information of the image photographing device (1320) and the pose information of the target aircraft (20) according to the second mode.

19. The aircraft of claim 11, wherein the target aircraft corresponds to a moving or fixed target located on the ground or in the sky.

20. A computer-readable, non-transitory recording medium having recorded thereon a program for executing the method of operating an aircraft of claim 1.
